# FASCICULE DE BREVET EUROPEEN

(11) **EP 2 932 116 B1**
(45) Date de publication et mention de la délivrance du brevet: **05.09.2018**
(21) Numéro de dépôt: 13815064.4
(22) Date de dépôt: 06.12.2013
(51) Int. Cl.: F16C 33/10, F16C 33/20, C10M 107/38

(54) **ORGANE DE GUIDAGE SOUS FORME D'UNE BAGUE METALLIQUE POUR LE MONTAGE AVEC FROTTEMENT ET AVEC CAPACITE D'ARTICULATION ET/OU DE COULISSEMENT D'UN AXE**
FÜHRUNGSTEIL IN FORM EINES METALLRINGS FÜR EINE ANORDNUNG MIT REIBUNG UND MIT DER GELENK- UND/ODER GLEITFÄHIGKEIT EINER WELLE
GUIDING MEMBER IN THE FORM OF A METAL RING FOR ASSEMBLY WITH FRICTION AND WITH THE ARTICULATING AND/OR SLIDING CAPABILITY OF A SHAFT

(30) Priorité: 13.12.2012 FR 1261981
(43) Date de publication de la demande: 21.10.2015
(73) Titulaire: H.E.F., 42160 Andrezieux-Boutheon (FR)
(72) Inventeur: VILLEMAGNE, Patrick, F-42100 Saint-Etienne (FR); GODARD, Georges, F-42260 Saint-Germain-Laval (FR)
(74) Mandataire: Cabinet Laurent & Charras
(86) Numéro de dépôt international: PCT/FR2013/052965
(87) Numéro de publication internationale: WO 2014/091123

(56) Documents cités:
- WO-A1-2012/127759
- FR-A1- 2 882 409
- "Permaglide Gleitlager", 31 décembre 1983 (1983-12-31), Karl Schmidt GmbH, Federal Republic of Germany, XP002711059, pages 19,20,31
- Kolbenschmidt Pierburg Group: "Permaglide Caralogue 2010", , 31 January 2011 (2011-01-31), XP055383436, Retrieved from the Internet: URL:https://www.albeco.com.pl/data/catalog ueb/Permaglide_2010_catalogue_EN.pdf [retrieved on 2017-06-21]
- Anonymous: "Permaglide : KS P20", , 20 June 2017 (2017-06-20), XP055387196, Retrieved from the Internet: URL:https://www.permaglide.com/fr/produits /informations-detaillees-sur-les-materiaux /ks-p20/ [retrieved on 2017-07-03]

## Description

L'invention concerne un organe de guidage autolubrifiant pour tout type d'articulation.

L'invention trouve des applications particulièrement avantageuses pour les articulations de type bague ou rotule ou pour des glissières présentant des agencements aptes à faire office de réserve de graisse avec, pour objectif, de permettre un graissage uniquement au montage et/ou avec des espacements de graissage très important.

Ces agencements, aptes à faire office de réserve de graisse, peuvent être constitués par des trous, des alvéoles, des gorges, quadrillage ...

Une solution de ce type ressort de l'enseignement du brevet FR 2 882 409.

Il ressort de cet état de la technique que la graisse contenue dans le fond des agencements aptes à faire office de réserve de graisse, a des difficultés à venir se positionner entre, par exemple, l'arbre et le palier, pour venir lubrifier la zone de contact et de frottement.

C'est notamment le cas lorsque les agencements aptes à faire office de réserve de graisse sont profonds.

Il en résulte que la graisse a tendance à rester dans le fond des agencements de sorte qu'elle n'assure plus dans le temps sa fonction de lubrification au niveau de la zone de contact. Le catalogue « Permaglide®. Gleitlager » de Karl Schmidt GmbH, publié en mars 1983, divulgue un organe de guidage ou palier coulissant sous forme d'une bague métallique. L'alésage de la bague a une surface frottante réalisée en bronze fritté et un revêtement autolubrifiant. La surface frottante a des poches de graisse. La figure 9 de la page 19 montre une épaisseur diminuée du revêtement autolubrifiant au niveau de la poche.

Le catalogue « Permaglide®. Catalogue 2010 » de KS Gleitlager GmbH divulgue à la page 24 qu'un tel revêtement autolubrifiant est appliqué sous forme pulvérulente et roulé par laminage. Dans le même temps les poches de graisse sont mises en place.

L'invention s'est fixée pour but de remédier aux inconvénients mentionnés de manière simple, sûre, efficace et rationnelle.

Le problème que se propose de résoudre l'invention est de permettre à la graisse contenue dans les agencements de la bague ou autre d'alimenter les surfaces en contact pendant le fonctionnement.

Pour résoudre un tel problème un revêtement autolubrifiant, à faible mouillabilité, est appliqué sur la totalité de la surface dudit alésage, y compris dans les agencements aptes à faire office de réserve de graisse de sorte qu'après usure de la couche de revêtement autolubrifiant au niveau de la surface frottante de l'alésage, la différence de mouillabilité entre ladite surface frottante et les agencements présentant toujours le revêtement, permet de faire sortir la graisse desdits agencement pour venir lubrifier ladite surface frottante.

Selon une autre caractéristique, le revêtement autolubrifiant à faible mouillabilité est à base de PTFE, MoS2 ou de Graphite par exemple.

Les agencements aptes à faire office de réserve de graisse peuvent être constitués de manière connue par des trous, des alvéoles, des rainures, lesquelles rainures peuvent former un quadrillage, des chevrons...

L'invention est exposée ci-après plus en détail à l'aide des dessins annexés dans lesquels :
- La fig. 1 est une vue en coupe longitudinale à caractère schématique selon un mode de réalisation, d'un organe de guidage sous forme d'une bague pour le montage avec frottement et capacité d'articulation d'un axe ; la bague étant représentée avant usure, le revêtement autolubrifiant étant symbolisé par des points.
- La figure 2 est une vue en perspective de la bague selon les conditions de la figure 1.
- La figure 3 est une vue en coupe longitudinale de la bague après usure du revêtement sur une partie de l'alésage, le revêtement auto-lubrifiant restant dans les cavités, les débris dudit revêtement de la zone usée se mélangeant à la graisse et venant se loger pour participer à la lubrification.
- La figure 4 est une vue en perspective de la bague dans les conditions relevant de la figure 3.

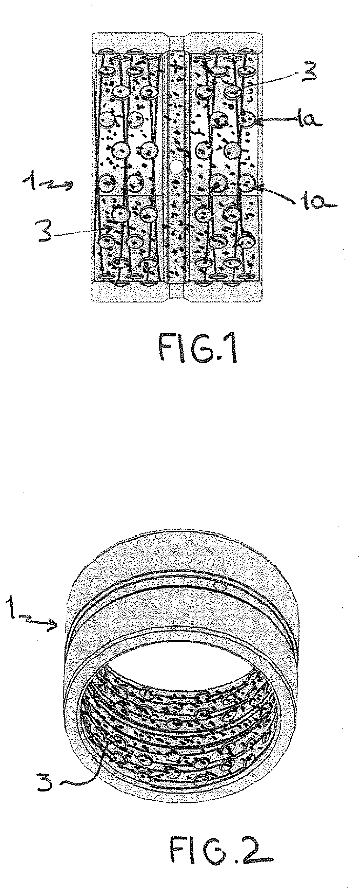

On a illustré (figure 1) un exemple de réalisation d'un organe de guidage sous forme d'un corps cylindrique (1) telle qu'une bague, présentant un alésage coaxial pour le montage et le frottement d'un axe d'articulation et de coulissement en combinaison avec de la graisse.

La graisse est contenue dans des agencements (la) que présente l'alésage de la bague. Par exemple, les agencements (la) peuvent être constitués par des trous, des alvéoles, des rainures ...

Les rainures peuvent, par ailleurs, former un quadrillage ou des chevrons. Le corps cylindrique (1) qui constitue la bague est réalisé à partir de tout type de matériaux présentant une haute résistance à l'usure et/ou au grippage, à la corrosion dans des conditions de fonctionnement extrême notamment en cas de pression élevée, de corrosion et d'abrasion.

De manière connue le corps cylindrique (1) notamment son alésage, peut être soumis à tout type de traitement de surface.

On rappelle que par organe de guidage, on entend tout type de paliers, de glissières, de rotules ...

Selon une caractéristique à la base de l'invention un revêtement auto lubrifiant (3) à faible mouillabilité est appliqué sur la totalité de la zone de frottement de l'alésage de la bague (1) y compris dans les agencements (la) aptes à faire office de réserve de graisse.

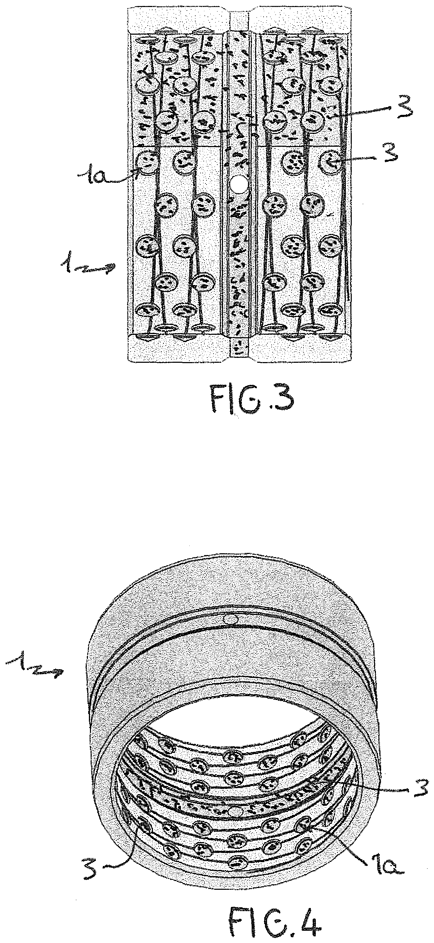

Il résulte de ces dispositions qu'après usure de la couche de revêtement autolubrifiant (3) au niveau de la zone de frottement de l'alésage, et cela après une certaine durée de fonctionnement, la différence de mouillabilité entre ladite zone de frottement, ne présentant plus le revêtement, et les agencements aptes à faire office de réserve de graisse mais présentant toujours le revêtement, a naturellement tendance à faire sortir la graisse desdits agencements afin de venir lubrifier ladite surface frottante (figures 3 et 4).

Le revêtement autolubrifiant (3) à faible mouillabilité peut être à base de PTFE, de MoS2, de Graphite ...

Comme indiqué, après consommation totale de la couche de revêtement autolubrifiant, au niveau de sa surface frottante, ledit revêtement est présent uniquement dans les trous, alvéoles ou autres constituant les réserves de graisse.

Les avantages ressortent bien de la description. On souligne et on rappelle qu'il est par conséquent possible d'utiliser toute la graisse contenue dans les agencements de l'alésage de la bague ou autre au niveau de la surface frottante afin d'augmenter les intervalles de graissage.

A noter que les agencements aptes à faire office de réserve de graisse peuvent être disposés entre des gorges formées à chaque extrémité de l'alésage de la bague.

On renvoie aux essais comparatifs ci-après, entre une bague, selon l'état de la technique, c'est-à-dire sans revêtement autolubrifiant et une bague selon l'invention, c'est-à-dire avec revêtement autolubrifiant à faible mouillabilité appliqué au niveau de la surface frottante et des agencements aptes à faire office de réserve de graisse.

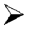 ***Bague selon l'état de la technique :***

▪ Nature de l'axe : 16 NC 6 CT Ra : 0.4
▪ Nature du palier : bague quadrillée
▪ Dimensions du palier : Ø interne : 30mm, Ø externe : 36mm, largeur de la zone de frottement : 20mm
▪ Mouvement : rotation alternée sur 100 degrés
▪ Pression calculée en surface projetée : 50 Mpa
▪ Vitesse de glissement : 8 mm/s
▪ Graisse extrême pression : au savon au lithium, type SNR - LUB EP grade NLGI 2
▪ Graissage au montage puis fonctionnement sans apport supplémentaire de graisse.

### Résultat des essais :

Nombre d'oscillations avant augmentation rapide du coefficient de frottement : ***160 000 cycles.***

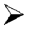 ***Bague selon l'invention***

▪ Nature de l'axe : 16 NC 6 CT Ra : 0.4,
▪ Nature du palier : bague quadrillée,
▪ Dimensions du palier : Ø interne : 30mm, Ø externe : 36mm, largeur de la zone de frottement : 20mm
▪ Mouvement : rotation alternée sur 100 degrés
▪ Pression calculée en surface projetée : 50 Mpa,
▪ Vitesse de glissement : 8 mm/s,
▪ Graisse extrême pression : au savon au lithium, type SNR - LUB EP grade NLGI 2,
▪ Graissage au montage puis fonctionnement sans apport supplémentaire de graisse.

### Résultat des essais :

Nombre d'oscillations avant augmentation rapide du coefficient de frottement : > ***320 000 cycles** (essai arrêté avant son terme).*

## Revendications

1. Organe de guidage sous forme d'une bague métallique (1) pour le montage avec frottement et avec capacité d'articulation et/ou de coulissement d'un axe, l'alésage de la bague ayant une surface frottante réalisée en matériau présentant une haute résistance à l'abrasion, la surface frottante présentant des agencements (la) aptes à faire office de réserve de graisse au niveau de la zone de frottement, dans lequel une couche de revêtement autolubrifiant (3), à faible mouillabilité, est appliquée sur la totalité de la surface frottante dudit alésage, y compris dans les agencements (la) aptes à faire office de réserve de graisse, qui est ensuite applicable sur la surface frottante, y compris dans les agencements (1a), de sorte qu'après usure totale de la couche de revêtement autolubrifiant (3) au niveau de la surface frottante de l'alésage, la différence de mouillabilité entre ladite surface frottante dépourvue de revêtement à faible mouillabilité (3) et les agencements (la) présentant toujours le revêtement à faible mouillabilité (3), permet de faire sortir ladite graisse desdits agencements (la) pour venir lubrifier ladite surface frottante dépourvue de revêtement à faible mouillabilité (3).

2. Organe selon la revendication 1, **caractérisé en ce que** le revêtement autolubrifiant (3) à faible mouillabilité est à base de PTFE.

3. Organe selon la revendication 1, **caractérisé en ce que** le revêtement autolubrifiant (3) à faible mouillabilité est à base de MoS2.

4. Organe selon la revendication 1, **caractérisé en ce que** le revêtement autolubrifiant (3) à faible mouillabilité est à base de Graphite.

5. Organe selon l'une quelconque des revendications 1 à 4, **caractérisé en ce que** les agencements (la) aptes à faire office de réserve de graisse sont constitués par des trous ou alvéoles.

6. Organe selon l'une quelconque des revendications 1 à 4, **caractérisé en ce que** les agencements (la) aptes à faire office de réserve de graisse sont constitués par des rainures.

7. Organe selon la revendication 6, **caractérisé en ce que** les rainures forment un quadrillage.

8. Organe selon la revendication 6, **caractérisé en ce que** les rainures forment des chevrons.

9. Organe selon l'une quelconque des revendications 1 à 4, **caractérisé en ce que** les agencements (la) aptes à faire office de réserve de graisse sont disposés entre des gorges formées à chaque extrémité de l'alésage de la bague.

## Patentansprüche

1. Führungselement in Form eines Metallrings (1) für die Montage mit Reibung und Gelenkfähigkeit und/oder Gleitfähigkeit eines Stifts, wobei die Bohrung des Rings eine Reibungsfläche aufweist, die aus einem Material gefertigt ist, das eine hohe Abriebfestigkeit aufweist, wobei die Reibungsfläche Anordnungen (la) aufweist, die geeignet sind, als Schmierfettvorrat im Bereich der Reibungszone zu dienen, wobei eine selbstschmierende Beschichtung (3) von geringer Benetzbarkeit auf die gesamte Reibungsfläche der genannten Bohrung aufgebracht ist, einschließlich in den Anordnungen (1a), die geeignet sind, als Schmierfettvorrat zu dienen, welcher dann auf die Reibungsfläche auftragbar ist, einschließlich in den Anordnungen (1a), so dass nach dem vollständigen Verschleiß der selbstschmierenden Beschichtung (3) im Bereich der Reibungsfläche der Bohrung der Unterschied in der Benetzbarkeit zwischen der Reibungsfläche ohne Beschichtung von geringer Benetzbarkeit (3) und den Anordnungen (1a), die die Beschichtung von geringer Benetzbarkeit (3) nach wie vor aufweisen, ermöglicht, dass das Schmierfett aus den Anordnungen (1a) heraustritt, um die Reibungsfläche ohne Beschichtung von geringer Benetzbarkeit (3) zu schmieren.

2. Element gemäß Anspruch 1, **dadurch gekennzeichnet, dass** die selbstschmierende Beschichtung (3) von geringer Benetzbarkeit auf PTFE beruht.

3. Element gemäß Anspruch 1, **dadurch gekennzeichnet, dass** die selbstschmierende Beschichtung (3) von geringer Benetzbarkeit auf MoS2 beruht.

4. Element gemäß Anspruch 1, **dadurch gekennzeichnet, dass** die selbstschmierende Beschichtung (3) von geringer Benetzbarkeit auf Graphit beruht.

5. Element gemäß einem der Ansprüche 1 bis 4, **dadurch gekennzeichnet, dass** die Anordnungen (1a), die geeignet sind, als Schmierfettvorrat zu dienen, aus Löchern oder Zellen gebildet sind.

6. Element gemäß einem der Ansprüche 1 bis 4, **dadurch gekennzeichnet, dass** die Anordnungen (1a), die geeignet sind, als Schmierfettvorrat zu dienen, aus Rillen gebildet sind.

7. Element gemäß Anspruch 6, **dadurch gekennzeichnet, dass** die Rillen ein Raster bilden.

8. Element gemäß Anspruch 6, **dadurch gekennzeichnet, dass** die Rillen ein Zickzackmuster bilden.

9. Element gemäß einem der Ansprüche 1 bis 4, **dadurch gekennzeichnet, dass** die Anordnungen (1a), die geeignet sind, als Schmierfettvorrat zu dienen, zwischen Einkerbungen angeordnet sind, die an jedem Ende der Bohrung des Rings ausgebildet sind.

## Claims

1. Guidance device in the form of a metal ring (1) for assembly with friction and with capability for articulation and / or sliding of a pin, the bore of the ring having a friction surface made of a material having a high resistance under abrasion, the friction surface having workings (la) able to act as a reserve of grease at the friction zone, wherein a layer of low wettability self-lubricating coating (3) is applied to the entire friction surface of said bore, including in the workings (la) adapted to act as a reserve of grease, which is then applicable on the friction surface, including in the workings (1a), such that after total wearing of the layer of self-lubricating coating (3) at the friction surface of the bore, the difference in wettability between said friction surface without low wettability coating (3) and the workings (la) still having the low wettability coating (3), allows said grease to come out of said workings (1a) to lubricate said friction surface without low wettability coating (3).

2. Device according to claim 1, **characterized in that** the low-wettability self-lubricating coating (3) is based on PTFE.

3. Device according to claim 1, **characterized in that** the low-wettability self-lubricating coating (3) is based on MoS2.

4. Device according to claim 1, **characterized in that** the low-wettability self-lubricating coating (3) is based on Graphite.

5. Device according to any one of claims 1 to 4, **characterized in that** the workings (1a) suitable to act as grease reserves are composed of holes or cells.

6. Device according to any one of claims 1 to 4, **characterized in that** the workings (1a) suitable to act as grease reserves are composed of grooves.

7. Device according to claim 6, **characterized in that** the grooves form a grid.

8. Device according to claim 6, **characterized in that** the grooves form chevrons.

9. Device according to any one of claims 1 to 4, **characterized in that** the workings (la) suitable to act as grease reserves are positioned between grooves formed at each end of the ring's bore.
